(19) Europäisches Patentamt

European Patent Office

Office européen des brevets

(11) **EP 3 050 367 B1**

(12) **EUROPEAN PATENT SPECIFICATION**

(45) Date of publication and mention of the grant of the patent:
**10.01.2018 Bulletin 2018/02**

(21) Application number: **13798596.6**

(22) Date of filing: **14.11.2013**

(51) Int Cl.:
*H04W 52/24* *(2009.01)*     *H04W 52/14* *(2009.01)*
*H04W 52/34* *(2009.01)*

(86) International application number:
**PCT/EP2013/073770**

(87) International publication number:
**WO 2015/070905 (21.05.2015 Gazette 2015/20)**

(54) **METHODS AND NODES IN A WIRELESS COMMUNICATION NETWORK**

VERFAHREN UND KNOTEN IN EINEM FUNKKOMMUNIKATIONSNETZ

PROCÉDÉS ET NOEUDS DANS UN RÉSEAU DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.08.2016 Bulletin 2016/31**

(73) Proprietor: **Huawei Technologies Co., Ltd.
Longgang District
Shenzhen, Guangdong 518129 (CN)**

(72) Inventors:
• **QVARFORDT, Johan Christer
S-11624 Stockholm (SE)**

• **KOUDOURIDIS, George
S-17067 Solna (SE)**

(74) Representative: **Lord, Michael
Gill Jennings & Every LLP
The Broadgate Tower
20 Primrose Street
GB-London EC2A 2ES (GB)**

(56) References cited:
**US-A1- 2009 069 043     US-A1- 2012 224 545
US-A1- 2013 203 453**

**Description**

**FIELD OF INVENTION**

Implementations described herein relate generally to a first and second radio network node, to a wireless communication network, and to a method in a first and second radio network node. In particular is herein described a mechanism for determining a transmission power level to be utilized by said first radio network node.

**BACKGROUND OF INVENTION**

A User Equipment (UE), also known as a mobile station, wireless terminal and/ or mobile terminal is enabled to communicate wirelessly in a wireless communication network, sometimes also referred to as a cellular radio system. The communication may be made, e.g., between UEs, between a UE and a wire connected telephone and/ or between a UE and a server via a Radio Access Network (RAN) and possibly one or more core networks.

The wireless communication may comprise various communication services such as voice, messaging, packet data, video, broadcast, etc.

The UE may further be referred to as mobile telephone, cellular telephone, computer tablet or laptop with wireless capability, etc. The UE in the present context may be, for example, portable, pocket-storable, hand-held, computer-comprised, or vehicle-mounted mobile devices, enabled to communicate voice and/ or data, via the radio access network, with another entity, such as another UE or a server.

The wireless communication network covers a geographical area which is divided into cell areas, with each cell area being served by a radio network node, or base station, e.g., a Radio Base Station (RBS), which in some networks may be referred to as "eNB", "eNodeB", "NodeB" or "B node", depending on the technology and/ or terminology used.

The expression "cell" is in normal terminology used for the geographical area where radio coverage is provided by the radio network node at a base station site. One radio network node, situated on the base station site, may serve one or several cells. The radio network nodes may communicate over the air interface operating on radio frequencies with any UE within range of the respective radio network node.

In some radio access networks, several radio network nodes may be connected, e.g., by landlines or microwave, to a Radio Network Controller (RNC), e.g., in Universal Mobile Telecommunications System (UMTS). The RNC, also sometimes termed Base Station Controller (BSC), e.g., in GSM, may supervise and coordinate various activities of the plural radio network nodes connected thereto. GSM is an abbreviation for Global System for Mobile Communications (originally: Groupe Special Mobile).

In 3rd Generation Partnership Project (3GPP) Long Term Evolution (LTE) radio network nodes, which may be referred to as eNodeBs or eNBs, may be connected to a gateway, e.g., a radio access gateway, to one or more core networks.

In the present context, the expressions downlink, downstream link or forward link may be used for the transmission path from the radio network node to the UE. The expression uplink, upstream link or reverse link may be used for the transmission path in the opposite direction, i.e., from the UE to the radio network node.

Orthogonal Frequency Division Multiplexing (OFDM) is a transmission technique which divides the available bandwidth into a large number of equally spaced sub-carriers being orthogonal to each other. The orthogonality feature of OFDM plays a crucial role for the system performance, since the orthogonality combats intra-cell interference within a cell.

However, in multi-cell environments, inter-cell interference between neighboring cells exists. The inter-cell interference between cells is one of the major limiting factors reducing performance of the network. Especially, the inter-cell interference has a very negative influence on the performance at the cell edges of the cells. To mitigate the inter-cell problems and improving the cell edge performance is one of the key issues in the 3GPP LTE standardization work.

One possible method to mitigate the inter-cell interference is by means of resource allocation coordination. In brief, Inter-Cell Interference Coordination (ICIC) applies restrictions to the downlink resource management in a coordinated manner between adjacent cells. These restrictions can be in the form of restrictions on time/frequency available resources or/and on the transmit power that can be applied for certain time/frequency resources. ICIC requires communication between different network nodes in order to set and reconfigure these restrictions/coordinations of time/frequency resources and/or transmit power.

According to the time scale of interference operation, ICIC is classified into three categories: static, semi-static and dynamic reconfiguration. For static ICIC reconfiguration, the restrictions/coordinations are performed on a time scale corresponding to days. For semi-static ICIC reconfiguration, the restrictions/coordinations are performed on a time scale corresponding to tens of seconds or longer. For dynamic ICIC, the restrictions/coordinations are performed for every Transmission Time Interval (TTI), which renders the dynamic ICIC impractical due to the excessive signaling between network nodes and the high complexity needed for the resource scheduler. Static and semi-static ICIC are currently being considered under the 3GPP LTE standardization work.

In prior art, there have been many proposals suggesting fractional frequency reuse (FFR) schemes as candidates to cope with inter-cell interference. The fundamental idea behind FFR is to divide/categorize the users within the cells as cell-center users (CCUs) and cell-edge users (CEUs), based on their location or on geometrical information available within the cell. Then, each user category, i.e. CEU and CCU, respectively, is assigned a different sub-band out of the available spectrum.

There have been a number of proposals for how the available band should be utilized for the CCUs and CEUs. According to some proposals, the available band should be divided into two sub-bands. The frequency band being allocated to cell-edge users should here be orthogonal between neighboring cells. The usage of the two sub-bands has been discussed. One proposal gives one sub-band to all users and the other sub-band only to cell-center users. Another proposal gives one sub-band to cell-edge users only and the other sub-band to all users. A further proposal gives one sub-band exclusively to the cell-edge users and the other sub-band exclusively to the cell-center users.

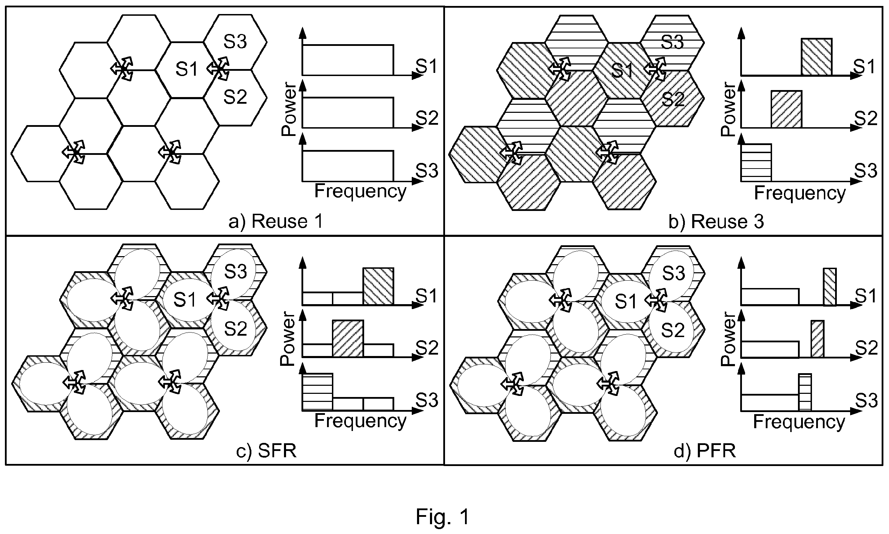

Two variants of FFR are soft frequency reuse (SFR) and partial frequency reuse (PFR), being schematically illustrated in figure 1. In figure 1, a number of cells and three cell sectors S1, S2, S3 are schematically illustrated. Also, the used frequency band and transmit power for each one of these cell sectors are schematically illustrated. In "a) Reuse 1" in figure 1, a general reuse 1 configuration is illustrated, i.e. all of the cell sectors S1, S2 S3 transmit on the same frequency band. Cell reuse factor 1 thus means that the same frequency band is utilized for all cell sectors. In "b) Reuse 3" in figure 1, a general reuse 3 configuration is illustrated, i.e. each one of the cell sectors S1, S2 S3 transmit on an individual frequency sub-band.

In SFR, the reuse factor is 1 in the cell-center area and greater than 1 in the cell-edge area, as is schematically illustrated in "c) SFR" in figure 1. In SFR, the available bandwidth is divided into two groups; the major subcarrier group and the minor subcarrier group. The major subcarrier group is assigned to the cell-edge users, which therefore also is referred to as cell-edge band (CEB). The CEB is usually 1/3 of the available bandwidth and is orthogonal to CEBs of neighboring cells. On the other hand, the minor subcarrier group, being referred to as cell-center band (CCB), is used exclusively by the cell-center users. The cell-edge band (CEB) can also at least partly be used by CCUs if the CEB is not fully utilized by CEUs. The transmission power for the major subcarrier group CEB in the cell-edge area is higher than the transmission power for the minor subcarrier group (CCB) in the cell-center area.

As disclosed in some prior art solutions, the so called power ratio, which is the ratio between the transmit powers of the minor subcarrier group and the major subcarrier group, is a variable parameter that can be adjusted to give more or less power to CEUs based on the current traffic distribution within the cell. Performance measurements for such a solution show that the cell-edge performance can be improved by varying the power ratio. However, as the cell-edge performance improves when the power ratio parameter is adjusted, the overall cell throughput deteriorates.

The SFR illustrated in figure 1 is based on a static coordination scheme, since 1/3 of the available spectrum constantly is reserved for cell-edge users. In the case of varying traffic loads and varying data rate requirements close to the cell edge, the adjustable power ratio parameter approach will be sub-optimal since the coordination is still static.

A semi-static coordination scheme has also been presented by prior art, in which the number of frequency sub-bands reserved for CEUs vary according to the traffic load near the cell edge. A cell with high traffic load at the edge is here allocated a higher number of reserved sub-bands than a cell with low traffic load near the cell edge. This method requires a centralized algorithm that can decide and control the nodes in a coordinated way.

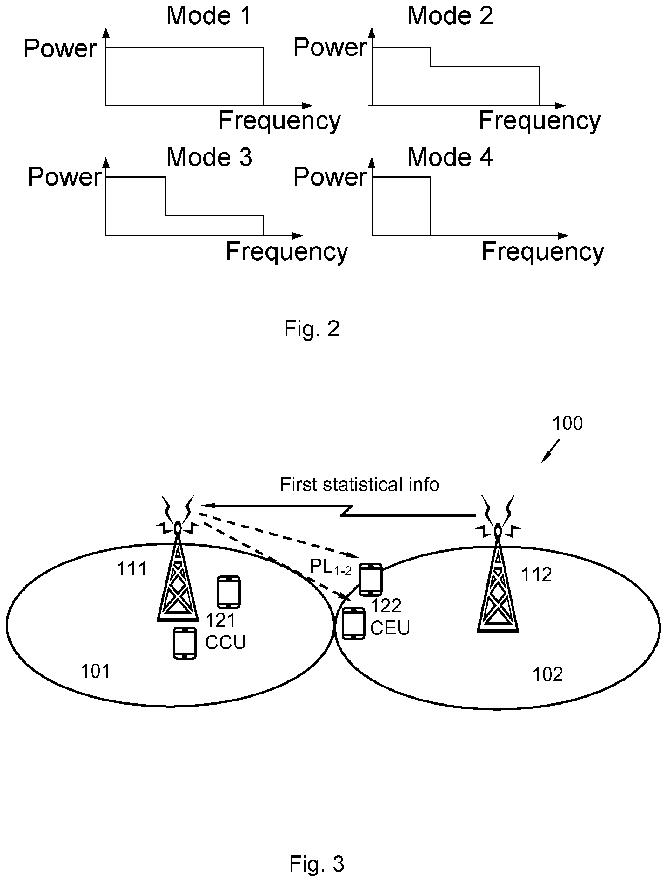

An Adaptive Fractional Frequency Reuse (AFFR) scheme has also been proposed in prior art. According to this scheme, each cell has four modes of operation, as is schematically shown in figure 2. Mode 1 is here a reuse-1 or a universal reuse configuration. Mode 2 uses SFR, wherein the lower power sub-band utilizes half (½) of the transmit power of the higher power sub-band. Mode 3 uses SFR, wherein the lower power sub-band utilizes one fourth (¼) of the transmit power of the higher power sub-band. Mode 4 uses hard reuse with a reuse-3. According to the prior art proposal, each cell starts with a reuse factor of 1 when the load is low and then switches to higher modes if the load increases. When a cell uses mode 2 or higher, then all adjacent cells have to use mode 2 or higher. This requirement is achieved through coordination between adjacent cells and each cell keeps track of the modes used by an adjacent cell by looking at its neighbour cell list. One of the problems with AFFR is that as the load increases, the whole, or a large part, of the network has to switch the used power level and cannot individually adjust the power level according to the actual demand in the different cells. The solution is also an iterative process that slowly converges by learning to define thresholds for the switch between different modes. Also, for a feasible solution only a few modes can be defined, which gives only a rough optimization of the performance.

An inter-cell interference coordination scheme based on Soft Frequency Reuse (SerFR) has also been proposed in prior art. SerFR aims at providing larger peak rates for cell edge users and for providing a more frequency selective scheduling gain than SFR can provide. The main idea of SerFR is almost the same as in SFR, i.e. the power profile includes higher power and lower power frequency bands. However, both cell center regions and cell edge regions use frequency reuse factor 1. In order to increase the data rate at the cell edges, a scheduler that assigns the higher power frequency bands to cell-edge users with greater probability is designed by modifying the proportional fairness (PF) scheduling algorithm. SerFR requires accurate setting of several unknown weights for good performance. SerFR does also not consider the spatial distribution of users being interfered by the transmissions.

The prior art solutions being discussed above all have problems being related to an overall system performance and/or throughput. Especially, for the case of varying traffic loads and varying data rate requirements e.g. close to the cell edge, the complexity will be high or the performance will be poor for the above presented prior art methods.

US 2009/0069043 relates to method and apparatus for controlling transmission power in mobile communication system based on fractional frequency reuse.

## SUMMARY OF INVENTION

It is therefore an objective to solve at least some of the above mentioned disadvantages and to improve the performance in a wireless communication network.

The present invention provides methods according to claims 1 and 7, network nodes according to claims 8 and 10, computer program products according to claims 9 and 11, and a wireless network according to claim 12. The remaining features are defined in the respective dependent claims.

A general concept according to embodiments of the presented method is to utilize dynamic spatial distribution of the UEs for determining transmit power to be utilized for downlink communication with the UEs. Especially, the dynamic spatial distribution of the UEs among and between the cells is used for exactly and efficiently determining downlink transmit powers such that the overall system performance is increased.

The embodiments relate to a distributed method which is handled on a cell pair level. Therefore, the method is easily scalable with the size of the system.

The presented method may slightly deteriorate the performance for the CEUs, but will at the same time result in a considerable performance improvement for the CCUs. Thus, an overall performance improvement is achieved by the method. Also, the slight performance deterioration for the CEUs can at least partly be compensated by resource allocation in the cells. Thereby, little or no CEU performance deterioration is traded for a considerable overall performance improvement. Other objects, advantages and novel features of the embodiments of the invention will become apparent from the following detailed description.

## BRIEF DESCRIPTION OF THE DRAWINGS

Embodiments of the invention are described in more detail with reference to attached drawings illustrating examples of embodiments of the invention in which:

Figure 1      is a schematic illustration of transmit power and frequency reuse for a three cell sector cell site.

Figure 2      is a schematic illustration of transmission modes for AFFR.

Figure 3      is a block diagram illustrating a wireless communication network according to some embodiments.

Figure 4      is a flow chart illustrating a method in a radio network node according to an embodiment.

Figure 5      is a flow chart illustrating a method in a radio network node according to an embodiment.

Figure 6      is a block diagram schematically illustrating transmit power used by a radio network node according to an embodiment.

Figure 7      schematically illustrates skewness in a wireless communication network according to an embodiment.

Figure 8      is a block diagram schematically illustrating a radio network node.

Figure 9      shows simulation results of the spectral efficiency.

Figure 10    shows simulation results of the energy efficiency.

## DETAILED DESCRIPTION OF INVENTION

Embodiments of the invention described herein are defined as first and second radio network nodes and methods in these radio network nodes, which may be put into practice in the embodiments described below. These embodiments may, however, be exemplified and realised in many different forms and are not to be considered as limited to the embodiments set forth herein. Instead, these embodiments are provided so that this disclosure will be thorough and complete.

Still other objects and features may become apparent from the following detailed description considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

Figure 3 is a schematic illustration over a wireless communication network 100 comprising a first radio network node 111 serving a first cell 101, at least one first User Equipment (UE) 121 in the first cell 101, a second radio network node 112 serving a second cell 102, and at least one second UE 122.

The wireless communication network 100 may at least partly be based on radio access technologies such as, e.g., 3GPP LTE, LTE-Advanced, Evolved Universal Terrestrial Radio Access Network (E-UTRAN), Universal Mobile Telecommunications System (UMTS), Global System for Mobile Communications (GSM)/ Enhanced Data rate for GSM Evolution (GSM/EDGE), Wideband Code Division Multiple Access (WCDMA), Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), just to mention some few options. The expressions "wireless communication network" and "wireless communication system" may within the technological context of this disclosure sometimes be utilised interchangeably.

The purpose of the illustration in Figure 3 is to provide a simplified, general overview of the wireless communication network 100 and the involved methods and nodes, such as the radio network nodes 111, 112 and UEs 121, 122 herein described, and the functionalities involved. The methods, the radio network nodes 111, 112 and the UEs 121, 122 will subsequently, as a non-limiting example, be described in a 3GPP LTE/ LTE-Advanced environment, but the embodiments of the disclosed methods, radio network nodes 111, 112 and UEs 121, 122 may operate in a wireless communication network 100 based on another access technology such as, e.g., any of the above already enumerated. Thus, although the embodiments of the invention are described based on, and using the notations of, 3GPP LTE systems, it is by no means limited to 3GPP LTE.

The illustrated wireless communication network 100 comprises the first radio network node 111, which may send radio signals to be received by the at least one first UE 121. The wireless communication network 100 also comprises the second radio network node 112, which may send radio signals to be received by the at least one second UE 122.

It is to be noted that the illustrated network setting of two radio network nodes 111, 112 and four UEs 121, 122 in Figure 3 is to be regarded as a non-limiting example of an embodiment only. The wireless communication network 100 may comprise any other number and/or combination of radio network nodes 111, 112 and/or UEs 121,122. A plurality of UEs 121, 122 and another configuration of radio network nodes 111, 112 may thus be involved in some embodiments of the disclosed invention. Thus, whenever "one" or "a/ an" UE 121, 122 and/ or radio network node 111, 112 is referred to in the present context, a plurality of UEs 121, 122 and/ or radio network nodes 111, 112 may be involved, according to some embodiments.

The radio network nodes 111, 112 may according to some embodiments be configured for downlink transmission and may be referred to, respectively, as e.g., a base station, NodeB, evolved Node Bs (eNB, or eNode B), base transceiver station, Access Point Base Station, base station router, Radio Base Station (RBS), micro base station, pico base station, femto base station, Home eNodeB, sensor, beacon device, relay node, repeater or any other network node configured for communication with the UEs 121, 122 over a wireless interface, depending, e.g., of the radio access technology and/ or terminology used.

The UEs 121, 122 may correspondingly be represented by, e.g. a wireless communication terminal, a mobile cellular phone, a Personal Digital Assistant (PDA), a wireless platform, a mobile station, a tablet computer, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the radio network nodes 111, 112, according to different embodiments and different vocabulary.

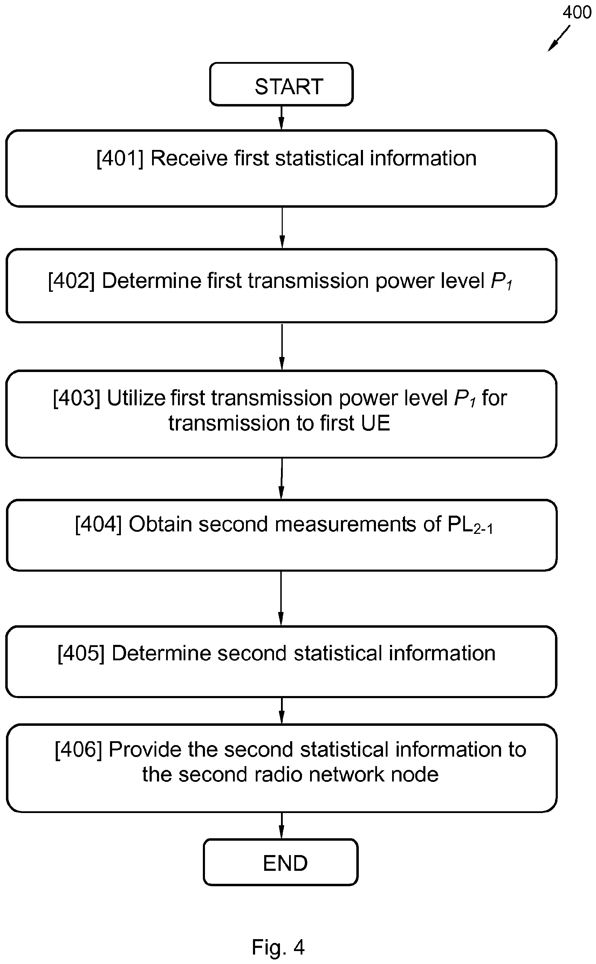

Figure 4 is a flow chart illustrating embodiments of a method 400 in a first radio network node 111 arranged for wireless communication with at least one first UE 121 in a first cell 101 of a wireless communication system 100. As stated above, the wireless communication network 100 may be based on 3rd Generation Partnership Project Long Term Evolution (3GPP LTE).

The first radio network node 111 may comprise an evolved NodeB (eNodeB) according to some embodiments.

For the first radio network node 111 to communicate with the first one or more UEs 121, the method 400 may comprise a number of method steps 401-403 being described more in detail below. According to an embodiment, the method may also include additional steps 404-406, as is described further below.

It is however to be noted that any, some or all of the described steps 401-403, may be performed in a somewhat different chronological order than the enumeration indicates, be performed simultaneously or even be performed in reversed order. Further, it is to be noted that some actions may be performed in a plurality of alternative manners according to different embodiments. The method 400 may comprise the following steps:

A first step 401, in which first statistical information related at least to one or more first path losses $PL_{1-2}$ is received from at least one second radio network node 112. The first statistical information is related at least to one or more first path losses $PL_{1-2}$ from the first radio network node 111 to at least one second user equipment 122, respectively, in at least one second neighbouring cell 102 being covered by the at least one second radio network node 112. Path loss is generally defined as an attenuation of a signal on its way from a transmitter to a receiver. Thus, the first path loss $PL_{1-2}$ is here related to an attenuation of a signal being transmitted from the first radio network node 111 to one or more second user equipment 122. The first statistical information can further comprise information about the load on the resources in at least one second neighbouring cell 102 used for transmission from at least one second radio network node 112 to at least one second user equipment 122. The load information can be related to a ratio between the used resources in at least one second neighbouring cell 102 and all the available resources for a time period $T_2$. The load information can also be related to the number of at least one second user equipment 122 being allocated to the resources in at least one second neighbouring cell 102. Thus, the load information can be related to the resource utilization of the second cell edge transmission resources and/or can be related to the number of users sharing the second cell edge transmission resources.

A second step 402, in which a first transmission power level $P_1$ to be used for a downlink transmission to at least one first user equipment 121 in the first cell 101 is determined based on the first statistical information.

A third step 403, in which the first transmission power level $P_1$ is used for transmission to the at least one first user equipment 121 in the first cell 101.

By utilizing the above described method 400, an Inter-Cell Interference Coordination based on user distribution is provided. Compared to the above presented prior art ICIC schemes, the herein presented method 400 takes into consideration a possible non-uniform user distribution in the first 101 and/or second cells 102 when determining the transmit power to be used. Also, the method 400 provides a transmit power determination that takes the dynamics of spatial user equipment distribution into account. Thus, a more accurate transmit power determination is provided by the method. Also, since the statistical information can be deduced based on measurements already today being performed in the cells 101, 102, the complexity increase is minimal for implementation of the proposed method 400.

Thus, the presented method 400 provides a method which primarily utilise path loss statistical information to exploit variations in spatial distribution among users within neighbouring cells. Also, interference coordination may be used in order to add a degree of freedom to the scheduling of the frequency resources. This makes it possible to trade off transmission power with capacity to reach an optimal setting. The method 400 thus supports a multi-cell coordinated scheduling algorithm which further exploits the spatial user distribution.

According to an embodiment of the method 400, the at least one second user equipment 122 includes at least one second cell edge user equipment (CEU) being located in a vicinity of an edge of the second cell 102. Thus, the first statistical information is here related at least to one or more first path losses $PL_{1-2}$ from the first radio network node 111 to at least one second CEU 122 at the cell-edge of the second cell. The first statistical information can further comprise load information about the ratio between the number of used transmission resources in the second cell for the at least one second CEU 122 and the total available resources defined for the at least one second CEU 122. The load information can also be related to the number of at least one second CEU 122 in the second cell.

A second user equipment 122 is here defined as a CEU if it experiences a first RSRP from the first radio network node 111 being at most a RSRP threshold value lower than a second RSRP from the second radio network node 112 at the second user equipment 122. This means that a second user equipment 122 being located in the second cell is regarded as being a CEU if it receives a first RSRP from the first radio network node 111 which is almost as strong as a second RSRP it receives from the second radio network node 112. Thus, at the cell-edge, the received transmissions from the first 111 and second 112 radio network nodes only differ in strength by at most the RSRP threshold value. Generally, in this document, if a UE in a cell receives a RSRP from a neighbouring radio network node being at most a RSRP threshold value lower than a RSRP from its own serving radio network node, it is defined as a CEU.

According to an embodiment of the method 400, the one or more first path losses $PL_{2-1}$ correspond to a measured RSRP. The one or more first path losses $PL_{2-1}$ can also be derived based on the RSRP and on information related to a transmission power utilized by the second radio network node 112 for at least one of its transmissions.

The at least one first user equipment 121, to which the first radio network node will provide transmissions utilizing the determined first transmission power level $P_1$, may include at least one first CCU being located in a center area of the first cell 101. A first user equipment 121 is here defined as a CCU if it experiences a first RSRP from the second radio network node 112 being at least a RSRP threshold value lower than a first RSRP from the first radio network node 111 at the first user equipment 121. Thus, for CCUs, there is a relatively big difference between the strengths of the first and second RSRPs, since the CCUs are located far from the neighbouring radio network nodes. Generally, in this document, if a UE in a cell receives a RSRP from a neighbouring radio network node being more than a RSRP threshold value lower than a RSRP from its own serving radio network node, it is defined as a CCU.

According to an embodiment of the method 400, after the first transmission power level $P_1$ has been determined, the first radio network node 111 communicates with the at least one first user equipment 121 by use of second cell edge transmission resources being allocated by the second cell 102 for the at least one second cell edge user equipment 122. Thus, both the first 111 and the second 112 radio network nodes can utilize resources allocated by the first 111 and second 112 radio network nodes for its CEUs when communicating with their respective CCUs, if this is determined as an efficient use of resources by the method.

The first radio network node can thus, at least partly, utilize cell-edge resources of the second cell for its transmission using the transmission power level $P_1$ to the first CCUs 121 within the first cell 101, if this results in an overall performance improvement.

According to an embodiment of the method 400, the first radio network node 111 is arranged for performing the further steps 404-406 illustrated in figure 4. Thus, according to the embodiment, the method 400 may include the following additional steps:

A fourth step 404 of obtaining second measurements of one or more second path losses $PL_{2-1}$ from the second radio network node 112 to at least one first user equipment 121, respectively, in the first cell 101.

A fifth step 405 of determining 405 second statistical information related at least to the one or more second path losses $PL_{2-1}$ based on the second measurements.

A sixth step 406 of providing the second statistical information to the second radio network node 112.

Thus, the first radio network node is according to the embodiment arranged for providing second statistical information from the first 111 to the second 112 radio network node such that a reciprocal exchange of first and second statistical information is achieved between the first 111 and second 112 radio network nodes.

The second measurements being obtained in the fourth step 404 are provided to the first radio network node 111 by the at least one first user equipment 121 being covered by the first radio network node in the first cell 101. Here, the at least one first user equipment 121 may include at least one first CEU being located close to the cell-edge.

The second statistical information being determined in the fifth step 405 include, according to an embodiment, to one or more of a second average path loss estimation $\mu_{PL2-1}$ and a second estimation of a standard deviation $\sigma_{PL2-1}$ for the second path loss $PL_{2-1}$.

The second statistical information being determined in the fifth step 405 further include, according to an embodiment, to a load information, U, which can be the utilization percentage of the transmission resources used for transmissions from the first radio network node 111 to the at least one first CEU 121.

According to an embodiment, the second statistical information is provided to the second radio network node 112 by use of an air interface between the first 111 and second 112 radio network nodes, a core network connecting the first 111 and second 112 radio network nodes, an optical fiber connecting the first 111 and second 112 radio network nodes, a wired interface connecting the first 111 and second 112 radio network nodes, and/or a third network node connecting the first 111 and second 112 radio network nodes.

The second statistical information can be provided to the second radio network node 112 at a predefined time interval. Alternatively, the second statistical information can be provided to the second radio network node 112 when a change of value related to the second statistical information since said statistical information previously was provided exceeds a threshold, i.e. when a change being large enough to be reported appears in the statistical information values. This embodiment minimized the signalling in the wireless communication system 100.

As is described more in detail below, the first transmission power level $P_1$, i.e. the transmit power being utilized by the first radio network node 111 for its communication with the at least one first user equipment 121 in the first cell 101, is determined by calculation of a power suppression Z to be utilized for that downlink transmission. The calculation of the power suppression Z can here be based on the first statistical information being provided by the second radio network node to the first radio network node. The calculation of first transmission power level $P_1$ can be based on an expected range of the received first statistical information. The range can be determined by the radio network configuration, including e.g. cell sizes, and the environment, including e.g. radio signal propagation attenuation. According to an embodiment, the determined first transmission power level $P_1$ is utilized by the first radio network node 111 during a first time period $T_1$ for transmission to the at least one first user equipment 121. After this first time period $T_1$, the power level to be used is again determined.

According to an embodiment of the method, the first statistical information include one or more of a first average path loss estimation $\mu_{PL1\text{-}2}$ and a first estimation of a standard deviation $\sigma_{PL1\text{-}2}$ for the one or more first path losses $PL_{1\text{-}2}$. According to an embodiment of the method, the first statistical information further include load information of the second cell edge resources.

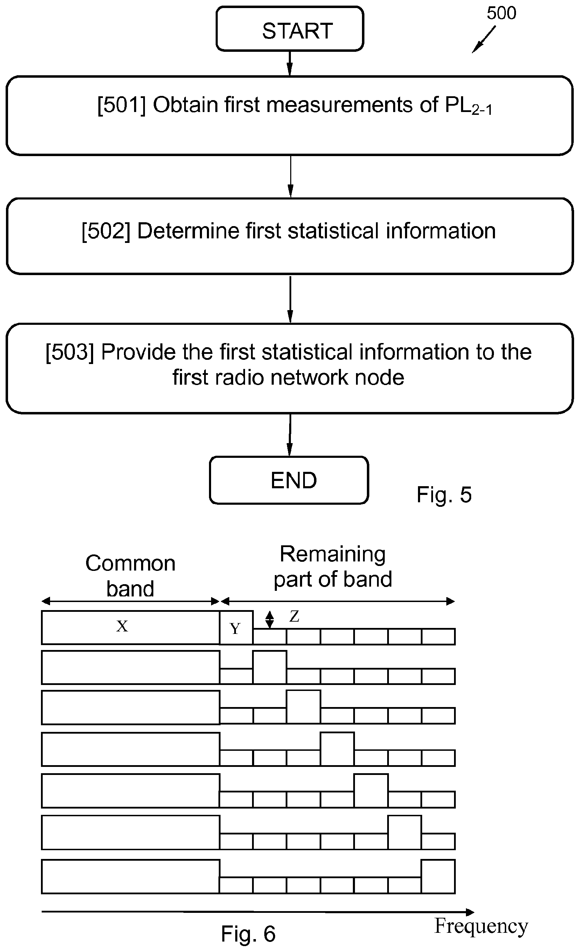

Figure 5 shows a flow chart illustrating embodiments of a method 500 in a second radio network node 112, for wireless communication with at least one second UE 122 in a second cell 102 of a wireless communication system 100.

For the second radio network node 112 to communicate with the one or more second UEs 122 and/or to assist the first radio network node 111, the method 500 may comprise a number of method steps 501-503 being described more in detail below.

It is however to be noted that any, some or all of the described steps 501-503, may be performed in a somewhat different chronological order than the enumeration indicates, be performed simultaneously or even be performed in reversed order. Further, it is to be noted that some actions may be performed in a plurality of alternative manners according to different embodiments. The method 500 may comprise the following steps:

A first step 501, in which first measurements are obtained of one or more first path loss $PL_{1\text{-}2}$ from the first radio network node 111 to at least one second user equipment 122, respectively, in the second cell 102. According to an embodiment, the first measurements are provided to the second radio network node 112 by the at least one second user equipment 122. Here, the first radio network node 111 covers a neighbouring first cell 101, as illustrated in figure 3.

A second step 502, in which first statistical information related at least to the one or more first path losses $PL_{1\text{-}2}$ from the first radio network node 111 to at least one second user equipment 122, respectively, is determined based on these first measurements. According to an embodiment, the first statistical information include to one or more of a first average path loss estimation $\mu_{PL1\text{-}2}$ and a first estimation of a standard deviation $\sigma_{PL1\text{-}2}$ for the first path loss $PL_{1\text{-}2}$. According to an embodiment of the method, the first statistical information further include load information of the second cell edge resources.

A third step 503, in which the first statistical information are provided to the first radio network node 111 by the second radio network 112. According to an embodiment, the first statistical information is provided to the first radio network node 111 by an air interface between the first 111 and second 112 radio network nodes, by a core network connecting the first 111 and second 112 radio network nodes, by an optical fiber connecting the first 111 and second 112 radio network nodes, by a wired interface connecting the first 111 and second 112 radio network nodes, and/or by a third network node connecting the first 111 and second 112 radio network nodes.

The first statistical information can be provided to the first radio network node at a predefined time interval, and/or when a change of value related to the second statistical information since said statistical information previously was provided exceeds a threshold, i.e. when a significant change in the value related to the second statistical information occurs.

To investigate the effect of ICIC on the system capacity in downlink communication, a simulation environment can be used according to an embodiment. The investigation is based on an assumption that there is a trade-off between the size of the ICIC area, the frequency band used for ICIC, and the power level that is allowed to be used in the power limited frequency bands. ICIC area here defines an area including the UEs that are interfered by another cell.

For the investigation of the gain in system performance resulting from the ICIC handling method, a power spectral density mask schematically shown in figure 6 may be used. UEs are generally assigned a number of sub-carriers within their band (or sub-carrier group). For LTE the UEs are assigned one or more Physical Resource Blocks (PRBs).

According to the density mask, there is a common band defined, in which all cells, i.e. all radio network nodes, may use their maximum power in a 1-reuse manner. The remaining part of the band is divided into seven equal parts where every seventh cell is allowed to transmit with full power and the other cells are only allowed to transmit with a limited power. The power limited bands are distributed in a regular repetition pattern, where all cells with the directional antennas pointing in the same direction are transmitting with the same power density mask.

The common band may here correspond to the resources used for transmission from radio network nodes to CCUs in the CCB, while the remaining part corresponds to the resources used for transmission from radio network nodes to CEUs in the CEB.

Thus, according to an embodiment, capacity is studied as a function of the following parameters:

(i) The size of the CCB partition, in percent of the total bandwidth, where all cells can use their maximum transmit power. The percentage range of the cell center band, i.e. the common band, is given by: $CCB \in \{0, \ldots 100\}$, where $CCB = 100 * (X/(X + (7*Y)))$.

(ii) The value of the transmit power to be used in the power limited bands, wherein the transmit power is equal to or lower than the nominal transmit power. I.e., the following values in dB are considered for power suppression Z $\in$ {-Inf, -44,-40, ..., 0}.

(iii) The ICIC area defines the UEs which are interfered by another cell. The ICIC area will be varied by varying the threshold of the difference in the received RSRP between serving cell and maximum received transmit power of the neighbouring cells, i.e. the above mentioned RSRP threshold, also called the ICIC threshold (ICICth). The ICICth interval is given in dB by $\Delta$RSRP $\in$ {-12, -10, ..., 0}.

For each sub-channel a bit rate is calculated using Shannon's rule divided by the number of UEs sharing the same sub-channel. CEUs on the cell edge can be restricted to Y sub-channels. Other UEs may use the remaining sub-channels.

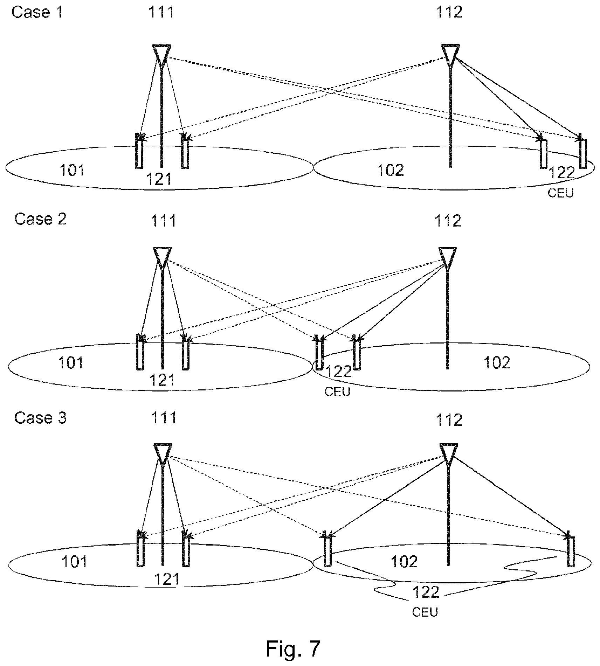

Spatial reuse can be expressed in terms of skewness, and can be used for the determination of power suppression Z according to an embodiment of the method. Skewness may, according to an embodiment, be estimated based on path loss differences as is schematically depicted in figure 7.

Figure 7 shows a non-limiting example of three different cases of user distribution in a cell-pair deployment of a first radio network node 111, also referred to as interfering node, and a second radio network node 112, also referred to as serving node, each serving first and second UEs 121 and 122, respectively. In figure 7, solid arrows illustrate normal/wanted transmissions. Non-solid (dotted) arrows illustrate interfering transmissions.

Without loss of generality, the depicted second UEs 122 may correspond to cell edge users. The fist UEs 121 may correspond to cell center users or to cell edge users. Below, the statistical information for each case are given and explained.

Case 1: $\mu_{PL_{I \rightarrow S}}$ = high; $\sigma_{PL_{I \rightarrow S}}$ = low

Case 2: $\mu_{PL_{I \rightarrow S}}$ = low; $\sigma_{PL_{I \rightarrow S}}$ = low

Case 3: $\mu_{PL_{I \rightarrow S}}$ = moderate; $\sigma_{PL_{I \rightarrow S}}$ = high

The parameters describing each case are denoted as described in the following. For instance, $\mu_{PL_{I \rightarrow S}}$ and $\sigma_{PL_{I \rightarrow S}}$ denote the average path loss estimation and the standard deviation of the path-loss estimation for the interference from the first radio network node 111 in the first cell 101 to the second cell edge users 122 in the coverage area 102 of the second cell 102. According to an embodiment, cells exchange to each other the average and standard deviation path-loss estimations of each other's cell edge users. As described above, the second radio network node 112 calculates the average and the standard deviation of its cell edge users' 122 path-loss from the first radio network node 111 based on reports of its second cell edge users 122. These values and/or other derived values that characterise spatial skewness are dynamically or periodically exchanged between the second 102/122 and first 101/121 cells/radio network nodes.

A comparison of these provided skewness values may, according to the embodiment, provide the necessary information for the first 121 and second 122 radio network nodes to determine the impact of their transmissions in the downlink and their possibility to increase or decrease the power suppression level for the cell edge bands. According to another embodiment, the first network node 121 operates as a second network node for a different cell edge band as in the non-limiting cases 1-3 above.

Figure 7 can also be used for deriving methods for setting the power suppression level Z.

As a non-limiting example, in case 1, the two second cell edge users 122 are located at the distant cell edge of the second cell 102, where the channel gain from the first radio network node 111 of the interfering cell 101 is much smaller than the channel gain from the serving radio network node 112. Consequently, the average path loss to the neighbouring first radio network node 111 in the first cell 101 is rather high, and the standard deviation is low. This indicates that the CEUs in each cell are clustered, i.e., users are in close proximity of one to another, and that the clusters are distantly located from the neighbouring first radio network node 111. Thus, for case 1, an increase of the power suppression level Z would benefit the first user equipment 121 in the first cell.

As a non-limiting example, for case 2, the situation in the second cell 102 is the different from in case 1. In case 2, the average path loss between the cell edge users 122 and the interfering first radio network node 111 is low, which indicates that the cell edge users 122 of the second cell 102 are located at the cell edge close to the first cell 101. Consequently, the channel gain from the interfering first radio network node 111 is comparable to the channel gain from the serving second radio network node 102. In addition, the standard deviation of the path loss between the second cell edge users 122 and the interfering first radio network node 111 is also low, which indicates that the second cell edge users 122 within the second cell 102 are in close proximity of each other. Thus, for case 2, the power suppression level Z should be decreased to reduce potential interference.

As a non-limiting example, for case 3, a scenario is considered for which the channel gain between the interfering first radio network node 111 and the serving second radio network node 112 for the of the second cell edge users 122 differs from being almost comparable, for the CEU 122 being located closer to the first radio network node 111, to being much smaller, for the CEU 122 being located at the opposite end of coverage area of the second cell 102. Thus, one second CEU is here located close to the first cell 101 and one second CEU is located far away from the first cell 101. In case 3, the mean path loss value lies between the values of the non-limiting example for case 1 and the non-limiting example of case 2, which implies a moderate path loss average. In addition, the standard deviation of case 3 is much larger than for case 1 and case 2, which implies a large spreading of the second cell edge users 122. In case 3, the power suppression level Z should be moderately adjusted to reduce potential interference. The level of power adjustment for the first radio network node 111 in the first cell 101 may be determined by load information related to the second CEUs 122.

As is described above, the average path loss and its standard deviation are measures of location indicating user location skewness among and within cells. Therefore, the statistical information may be utilised for determining the dynamic spatial distribution of the UEs, which can be utilized for determining the transmit power to be utilized for downlink communication with the UEs.

The embodiment described above may also, according to an embodiment, be extended to include a maximum path-loss value $max_{PL}$ as a reference point usable for determining the power suppression value Z, as can be seen in equations 1-3 below. According to an embodiment, a median path-loss, $median_{PL}$, which can be used to derive a measure of skewness, is also determined and exchanged between the first 111 and second 112 radio network nodes.

Thus, a method according to an embodiment of the method can be described as including the following steps:

- The second radio network node 112 obtains measurements of the path loss from the first radio network node 111 to the second cell edge users 122 in the second cell 102 from its second cell edge users 122.

- The second radio network node 112 then calculates statistical information including the mean and the standard deviation of the path loss measurements.

- The second radio network node 112 sends the statistical information to the first radio network node 111.

- The first radio network node 111 receives the statistical information from the second radio network node 112.

- Using the statistical information, the first radio network node 112 calculates a new transmission power level for the frequency band, in which the second radio network node 112 has allocated its cell edge users 122.

According to an embodiment of the method, the transmit power to be used by a radio network node may be calculated as:

$$D_{PL} = \max(PL) - \min(PL) \; ; \qquad \qquad \text{(eq.1)}$$

$$Z(\mu,\sigma) = \max(Z) \cdot \left( \frac{\mu - \min(PL) - \sigma}{D_{PL}} \right)^{\!\!1/\alpha} \; ; \quad \text{and} \qquad \text{(eq.2)}$$

and

$$P_{tx} = P_{\max,dB} - Z(\mu,\sigma) \, , \qquad \qquad \text{(eq.3)}$$

where $max\ (PL)$ is the above mentioned maximum path-loss value $max_{PL}$, $min\ (PL)$ is a minimum path-loss value, $D_{PL}$ is the range of expected reported values (depending on cell size and environment), i.e. the difference between $max\ (PL)$ und $min\ (PL)$, $\alpha$ is a scaling factor adjusting the impact on the lower system performance, $Z$ is the power suppression level as a function of the reported measurements $\mu$ and $\sigma$, $P_{tx}$ is the transmit power to be used, and $P_{\max,dB}$ is the maximal possible transmit power for the first radio network node 111.

According to an embodiment of the method, the scaling adjusting factor $\alpha$ may further be calculated as:

$$\alpha = \frac{Load_{CCU}}{Load_{CEU}} \qquad (\text{eq.4})$$

where $Load_{CCU}$ and $Load_{CEU}$ include information about the current load of the first cell center users 121 of the first radio network node 111 in the first cell 101, and the current load of the second cell edge users 122 of the second radio network node 112 in the second cell 102, respectively. The load information may be related to the number of users using the specified band in respective cell, or may be related to the number of used resources over the number of available resources over a period of time $T_1$, $T_2$, $T_3$.

The first radio network node 111 then uses the calculated power level $P_{tx}$ for the specified band for a defined period.

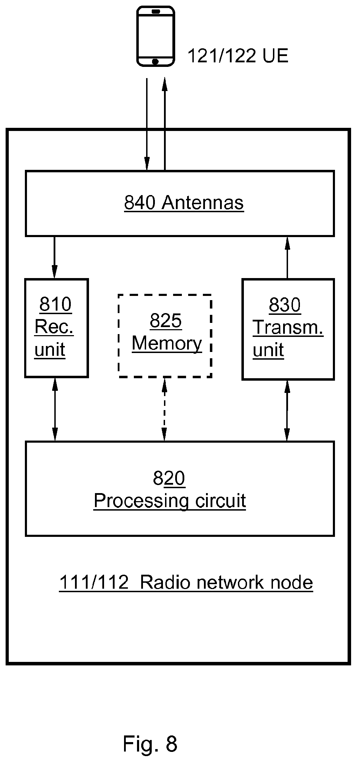

Figure 8 is a block diagram illustrating a first/second radio network node 111/112 in a wireless communication network 100. Since the first 111 and second 112 radio network nodes are configured in a corresponding way, figure 6 is in the following used for illustrating the configuration of both the first 111 and the second 112 radio network nodes, respectively. The first/second radio network node 111/112 is configured for performing the above mentioned methods 400/500 according to any, some or all of the steps 401-406 and any, some or all of the steps 501-503, respectively, in a wireless communication system 100.

For enhanced clarity, any internal electronics or other components of the first/second radio network node 111/112, not entirely essential for understanding the herein described embodiments have been omitted from Figure 8.

The first/second radio network node 111/112 comprises one or more antennas 840, and a receiver 810, configured for receiving wireless signals.

More in detail, the first radio network node 111 includes a receiver unit 810 being configured for receiving, from at least one second radio network node 112, first statistical information related at least to one or more first path losses $PL_{1-2}$ from the first radio network node 111 to at least one second user equipment 122, respectively, in at least one second neighbouring cell 102 being covered by the at least one second radio network node 112.

The first radio network node 111 also comprises a processing circuit 820 being configured for determining a first transmission power level $P_1$ to be used for a downlink transmission to at least one first user equipment 121 in the first cell 101 based on the first statistical information.

The first radio network node 111 further comprises a transmitter 830 configured for transmitting to the at least one first user equipment 121 by utilization of the first transmission power level $P_1$.

Correspondingly, the second radio network node 112 comprises a receiver 810, and a processing circuit 820. The processing circuit 820 is configured for obtaining first measurements of at least one first path loss $PL_{1-2}$ from a first radio network node 111 to at least one second user equipment 122, respectively, in the second cell 102. The first radio network node 111 covers, as is described above a neighbouring first cell 101.

The processing circuit 820 of the second radio network node 112 is also configured for determining first statistical information related to the at least one first path loss $PL_{1-2}$ from the first radio network node 111 to at least one second user equipment 122, respectively, based on the first measurements.

The processing circuit 820 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The herein utilised expression "processing circuit" may thus represent a processing circuitry comprising a plurality of processing circuits, such as, e.g., any, some or all of the ones enumerated above.

The processing circuit 820 may further perform data processing functions for inputting, outputting, and processing of data comprising data buffering and device control functions, such as call processing control, user interface control, or the like.

Also, the first/second radio network node 111/112 comprises a transmitter 830, configured for transmitting signals, e.g. signals including statistical information, to be received by the first UE 121 and the second UE 122, respectively.

Furthermore, the first/second radio network node 111/112 may comprise at least one memory 825, according to some embodiments. The memory 825 may comprise a physical device utilised to store data or programs, i.e., sequences of instructions, on a temporary or permanent basis. According to some embodiments, the memory 825 may comprise integrated circuits comprising silicon-based transistors. Further, the memory 825 may be volatile or non-volatile.

The previously described method steps 401-406 to be performed in the first radio network node 111 may be implemented through the one or more processing circuits 820 in the first radio network node 111, together with computer program code for performing the functions of the method steps 401-406. Thus a computer program product, comprising instructions for performing the steps 401-406 in the first radio network node 111 may perform the method 400 in a wireless communication system 100, when the computer program product is loaded in a processing circuit 820 of the first radio network node 111. Correspondingly, the previously described method steps 501-503 to be performed in the second radio network node 112 may be implemented through the one or more processing circuits 820 in the second radio network node 112, together with computer program code for performing the functions of the method steps 501-503. Thus a computer program product, comprising instructions for performing the steps 501-503 in the second radio network node 112 may perform the method 500 in a wireless communication system 100, when the computer program product is loaded in a processing circuit 820 of the second radio network node 112.

The first/second radio network node 111/112 may further be configured for including load information U in the statistical information as described above for the methods of the first/second radio network node 111/112.

The computer program product mentioned above may be provided for instance in the form of a data carrier carrying computer program code for performing any, at least some, or all of the steps 401-406 and/or any, at least some, or all of the steps 501-503 according to some embodiments when being loaded into the processing circuit 820. The data carrier may be, e.g., a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the first/second radio network node 111/112 remotely, e.g., over an Internet or an intranet connection.

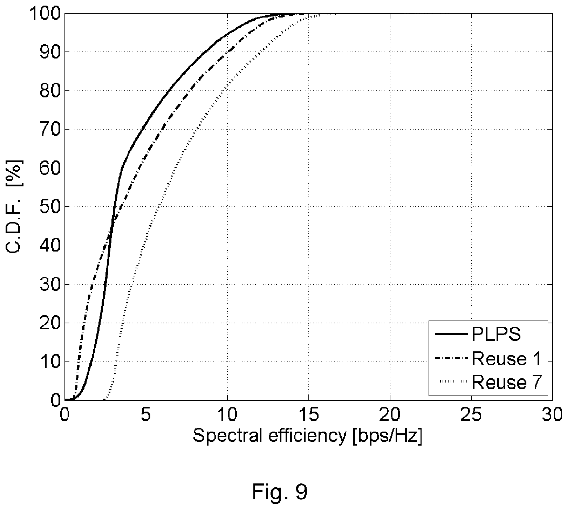

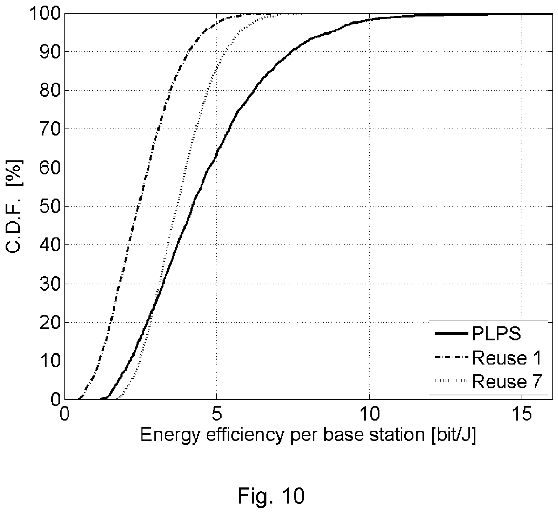

Figure 9 and 10 show simulation results for the above described method, denoted as "PLPS" in the figures. Figure 9 shows the cumulative density function of the spectral efficiency that each user will experience in the system. As is clearly shown in figure 9, the presented method outperforms the prior art reuse-1 scheme in terms of spectral efficiency for the worst users.

Figure 10 shows the energy efficiency of the cells in the system, measured in bits per Joule. As is clearly shown in figure 10, the presented method outperforms both the prior art schemes.

The terminology used in the detailed description of the embodiments as illustrated in the accompanying drawings is not intended to be limiting of the described methods 400, 500 and/or first/second radio network node 111/112, which instead are limited by the enclosed claims.

As used herein, the term "and/ or" comprises any and all combinations of one or more of the associated listed items. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof.

## Claims

1. A method (400) in a first radio network node (111) providing coverage for a first cell (101) of a wireless communication system (100), the method comprising:

   - receiving (401), from at least one second radio network node (112), first statistical information related at least to one or more first path losses $PL_{1-2}$ from said first radio network node (111) to at least one second user equipment (122), respectively, in at least one second neighbouring cell (102) being covered by said at least one second radio network node (112);
   - determining (402) a first transmission power level $P_1$ to be used for a downlink transmission to at least one first user equipment (121) in said first cell (101) based on said first statistical information; and
   - transmitting (403) to said at least one first user equipment (121) by utilization of said first transmission power level $P_1$;
   wherein said at least one second user equipment (122) includes at least one second cell edge user equipment being located in a vicinity of an edge of said second cell (102);
   wherein said first radio network node (111) communicates with said at least one first user equipment (121) by use of second cell edge transmission resources being allocated by said second cell (102) for said at least one second cell edge user equipment (122).
   **characterised in that**,
   said first statistical information includes a first average path loss estimation $\mu_{PL1-2}$ and a first estimation of a standard deviation $\sigma_{PL1-2}$ for said one or more first path losses $PL_{1-2}$, wherein said first average path loss estimation $\mu_{PL1-2}$ and said first estimation of standard deviation $\sigma_{PL1-2}$ are calculated based on said first path losses $PL_{1-2}$.

2. The method according to claim 1, wherein said at least one second cell edge user equipment (122) experiences a first Reference Symbol Received Power (RSRP) from said first radio network node (111) being at most a RSRP threshold value lower than a second RSRP from said second radio network node (112) at said at least one second cell edge user equipment (122).

3. The method according to claim 1 or 2, wherein said first statistical information further include load information $U$ of second cell edge transmission resources being allocated by said second cell (102) for said at least one second cell edge user equipment (122).

4. The method according to any of claims 1 to 3, wherein said first radio network node (111) is arranged for:

    - obtaining (404) second measurements of one or more second path losses $PL_{2-1}$ from said second radio network node (112) to at least one first user equipment (121), respectively, in said first cell (101);
    - determining (405) second statistical information related at least to said one or more second path losses $PL_{2-1}$ based on said second measurements; and
    - providing (406) said second statistical information to said second radio network node (112).

5. The method according to claim 4, wherein said second statistical information is provided to said second radio network node (112) by use of anyone in the group of:

    - an air interface between said first (111) and second (112) radio network nodes;
    - a core network connecting said first (111) and second (112) radio network nodes;
    - an optical fiber connecting said first (111) and second (112) radio network nodes;
    - a wired interface connecting said first (111) and second (112) radio network nodes; and
    - a third network node connecting said first (111) and second (112) radio network nodes.

6. The method according to any of claims 1 to 5, wherein said first transmission power level $P_1$ is determined by calculation of a power suppression $Z$ to be utilized for said downlink transmission to said at least one first user equipment (121), said calculation of said power suppression $Z$ being based on said first statistical information.

7. A method (500) in a second radio network node (112) providing coverage for a second cell (102) of a wireless communication system (100), comprising:

    - obtaining (501) first measurements of one or more first path losses $PL_{1-2}$ from a first radio network node (111) to at least one second user equipment (122), respectively, in said second cell (102), said first radio network node (111) covering a neighbouring first cell (101);
    - determining (502) first statistical information related at least to said one or more first path losses $PL_{1-2}$ from said first radio network node (111) to at least one second user equipment (122), respectively, based on said first measurements; and
    - providing (503) said first statistical information to said first radio network node (111);
    wherein said at least one second user equipment (122) includes at least one second cell edge user equipment being located in a vicinity of an edge of said second cell (102);
    wherein said first radio network node (111) communicates with at least one first user equipment (121) by use of second cell edge transmission resources being allocated by said second cell (102) for said at least one second cell edge user equipment (122);
    **characterised in that**,
    said first statistical information includes a first average path loss estimation $\mu_{PL1-2}$ and a first estimation of a standard deviation $\sigma_{PL1-2}$ for said one or more first path losses $PL_{1-2}$, wherein said first average path loss estimation $\mu_{PL1-2}$ and said first estimation of standard deviation $\sigma_{PL1-2}$ are calculated based on said first path losses $PL_{1-2}$.

8. A first radio network node (111) providing coverage for a first cell (101) of a wireless communication system (100), comprising:

    - a receiver (810) configured for receiving, from at least one second radio network node (112), first statistical information related at least to one or more first path losses $PL_{1-2}$ from said first radio network node (111) to at least one second user equipment (122), respectively, in at least one second neighbouring cell (102) being covered by said at least one second radio network node (112);
    - a processing circuit (820) configured for determining a first transmission power level $P_1$ to be used for a downlink transmission to at least one first user equipment (121) in said first cell (101) based on said first statistical information; and

- a transmitter (830) configured for transmitting to said at least one first user equipment (121) by utilization of said first transmission power level $P_1$;
wherein said at least one second user equipment (122) includes at least one second cell edge user equipment being located in a vicinity of an edge of said second cell (102);
wherein said first radio network node (111) communicates with said at least one first user equipment (121) by use of second cell edge transmission resources being allocated by said second cell (102) for said at least one second cell edge user equipment (122).
**characterised in that**,
said first statistical information includes a first average path loss estimation $\mu_{PL1-2}$ and a first estimation of a standard deviation $\sigma_{PL1-2}$ for said one or more first path losses $PL_{1-2}$, wherein said first average path loss estimation $\mu_{PL1-2}$ and said first estimation of standard deviation $\sigma_{PL1-2}$ are calculated based on said first path losses $PL_{1-2}$.

9. A computer program product in a first radio network node (111), according to claim 8, configured for performing the method (400) according to any of claims 1 to 6, for wireless communication with a user equipment (120) in a wireless communication system (100), when the computer program product is loaded in a processing circuit (820) of the first radio network node (111).

10. A second radio network node (112) providing coverage for a second cell (102) of a wireless communication system (100), comprising

- a processing circuit (820) configured for obtaining first measurements of one or more first path losses $PL_{1-2}$ from a first radio network node (111) to at least one second user equipment (122), respectively, in said second cell (102), said first radio network node (111) covering a neighbouring first cell (101); and configured for determining first statistical information related at least to said one or more first path losses $PL_{1-2}$ from said first radio network node (111) to at least one second user equipment (122), respectively, based on said first measurements; and
- a transmitter (830) configured for providing said first statistical information to said first radio network node (111) ;
wherein said at least one second user equipment (122) includes at least one second cell edge user equipment being located in a vicinity of an edge of said second cell (102);
wherein said first radio network node (111) communicates with at least one first user equipment (121) by use of second cell edge transmission resources being allocated by said second cell (102) for said at least one second cell edge user equipment (122).
**characterised in that**,
said first statistical information include a first average path loss estimation $\mu_{PL1-2}$ and a first estimation of a standard deviation $\sigma_{PL1-2}$ for said one or more first path losses $PL_{1-2}$, wherein said first average path loss estimation $\mu_{PL1-2}$ and said first estimation of standard deviation $\sigma_{PL1-2}$ are calculated based on said first path losses $PL_{1-2}$.

11. A computer program product in a second radio network node (112), according to claim 10, configured for performing the method (400) according to claim 7, for wireless communication with a user equipment (120) in a wireless communication system (100), when the computer program product is loaded in a processing circuit (820) of the second radio network node (112) .

12. A wireless communication system (100) comprising:

- at least one first radio network node (111) according to claim 8;
- at least one first user equipment (121) configured for communicating with said at least one first radio network node (111) ;
- at least one second radio network node (112) according to claim 10; and
- at least one second user equipment (122) configured for communicating with said at least one second radio network node (112) .

**Patentansprüche**

1. Verfahren (400) in einem ersten Funknetzknoten (111), der eine Abdeckung für eine erste Zelle (101) eines drahtlosen Kommunikationssystems (100) bereitstellt, wobei das Verfahren Folgendes umfasst:

Empfangen (401), von wenigstens einem zweiten Funknetzknoten (112), erster Statistikinformationen, die sich wenigstens auf einen oder mehrere erste Pfadverluste $PL_{1-2}$ von dem ersten Funknetzknoten (111) zu jeweils wenigstens einem zweiten Anwendergerät (122) in wenigstens einer zweiten Nachbarzelle (102), die durch den wenigstens einen zweiten Funknetzknoten (112) abgedeckt wird, beziehen;

Bestimmen (402) eines ersten Sendeleistungspegels $P_1$, der für ein Abwärtsstreckensenden zu wenigstens einem ersten Anwendergerät (121) in der ersten Zelle (101) verwendet werden soll, basierend auf den ersten Statistikinformationen; und

Senden (403) zu dem wenigstens einen ersten Anwendergerät (121) unter Nutzung des ersten Sendeleistungspegels $P_1$;

wobei das wenigstens eine zweite Anwendergerät (122) wenigstens ein zweites Zellenrandanwendergerät enthält, das sich in einer Nähe eines Rands der zweiten Zelle (102) befindet;

wobei der erste Funknetzknoten (111) mit dem wenigstens einen ersten Anwendergerät (121) unter Verwendung von zweiten Zellenrandsendebetriebsmitteln kommuniziert, die durch die zweite Zelle (102) für das wenigstens eine zweite Zellenrandanwendergerät (122) zugewiesen sind,

**dadurch gekennzeichnet, dass**,

die ersten Statistikinformationen eine erste mittlere Pfadverlustschätzung $\mu_{PL1-2}$ und eine erste Schätzung einer Standardabweichung $\sigma_{PL1-2}$ für den einen oder die mehreren ersten Pfadverluste $PL_{1-2}$ enthalten, wobei die erste mittlere Pfadverlustschätzung $\mu_{PL1-2}$ und die erste Schätzung der Standardabweichung $\sigma_{PL1-2}$ basierend auf den ersten Pfadverlusten $PL_{1-2}$ berechnet werden.

2. Verfahren nach Anspruch 1, wobei das wenigstens eine zweite Zellenrandanwendergerät (122) eine erste Referenzsymbolempfangsleistung (RSRP) von dem ersten Funknetzknoten (111) erfährt, die höchstens ein RSRP-Schwellenwert niedriger als eine zweite RSRP von dem zweiten Funknetzknoten (112) an dem wenigstens einen zweiten Zellenrandanwendergerät (122) ist.

3. Verfahren nach Anspruch 1 oder 2, wobei die ersten Statistikinformationen ferner Lastinformationen U von zweiten Zellenrandsendebetriebsmitteln enthalten, die durch die zweite Zelle (102) für das wenigstens eine zweite Zellenrandanwendergerät (122) zugewiesen sind.

4. Verfahren nach einem der Ansprüche 1 bis 3, wobei der erste Funknetzknoten (111) ausgelegt ist zum:

Erhalten (404) zweiter Messungen eines oder mehrerer zweiter Pfadverluste $PL_{2-1}$ von dem zweiten Funknetzknoten (112) zu jeweils wenigstens einem ersten Anwendergerät (121) in der ersten Zelle (101);

Bestimmen (405) zweiter Statistikinformationen, die sich wenigstens auf den einen oder die mehreren zweiten Pfadverluste $PL_{2-1}$ beziehen, basierend auf den zweiten Messungen; und

Bereitstellen (406) der zweiten Statistikinformationen für den zweiten Funknetzknoten (112).

5. Verfahren nach Anspruch 4, wobei die zweiten Statistikinformationen für den zweiten Funknetzknoten (112) unter Verwendung irgendeines in der Gruppe aus Folgendem bereitgestellt werden:

einer Luftschnittstelle zwischen dem ersten (111) und dem zweiten (112) Funknetzknoten;

einem Kernnetz, das den ersten (111) und den zweiten (112) Funknetzknoten verbindet;

einem Lichtleiter, der den ersten (111) und den zweiten (112) Funknetzknoten verbindet;

einer drahtgebundenen Schnittstelle, die den ersten (111) und den zweiten (112) Funknetzknoten verbindet; und

einem dritten Netzknoten, der den ersten (111) und den zweiten (112) Funknetzknoten verbindet.

6. Verfahren nach einem der Ansprüche 1 bis 5, wobei der erste Sendeleistungspegel $P_1$ durch Berechnung einer Leistungsunterdrückung Z, die für das Abwärtsstreckensenden zu dem wenigstens einen ersten Anwendergerät (121) benutzt werden soll, bestimmt wird, wobei die Berechnung der Leistungsunterdrückung Z auf den ersten Statistikinformationen basiert.

7. Verfahren (500) in einem zweiten Funknetzknoten (112), der Abdeckung für eine zweite Zelle (102) eines drahtlosen Kommunikationssystems (100) bereitstellt, wobei das Verfahren Folgendes umfasst:

Erhalten (501) erster Messungen eines oder mehrerer erster Pfadverluste $PL_{1-2}$ von einem ersten Funknetzknoten (111) zu jeweils wenigstens einem zweiten Anwendergerät (122) in der zweiten Zelle (102), wobei der erste Funknetzknoten (111) eine erste Nachbarzelle (101) abdeckt;

Bestimmen (502) erster Statistikinformationen, die sich wenigstens auf den einen oder die mehreren ersten

Pfadverluste $PL_{1-2}$ von dem ersten Funknetzknoten (111) zu jeweils wenigstens einem zweiten Anwendergerät (122) beziehen, basierend auf den ersten Messungen; und

Bereitstellen (503) der ersten Statistikinformationen für den ersten Funknetzknoten (111);

wobei das wenigstens eine zweite Anwendergerät (122) wenigstens ein zweites Zellenrandanwendergerät enthält, das sich in einer Nähe eines Rands der zweiten Zelle (102) befindet;

wobei der erste Funknetzknoten (111) mit wenigstens einem ersten Anwendergerät (121) unter Verwendung von zweiten Zellenrandsendebetriebsmitteln kommuniziert, die durch die zweite Zelle (102) für das wenigstens eine zweite Zellenrandanwendergerät (122) zugewiesen sind;

**dadurch gekennzeichnet, dass**

die ersten Statistikinformationen eine erste mittlere Pfadverlustschätzung $\mu_{PL1-2}$ und eine erste Schätzung einer Standardabweichung $\sigma_{PL1-2}$ für den einen oder die mehreren ersten Pfadverluste $PL_{1-2}$ enthalten, wobei die erste mittlere Pfadverlustschätzung $\mu_{PL1-2}$ und die erste Schätzung der Standardabweichung $\sigma_{PL1-2}$ basierend auf den ersten Pfadverlusten $PL_{1-2}$ berechnet werden.

8. Erster Funknetzknoten (111), der Abdeckung für eine erste Zelle (101) eines drahtlosen Kommunikationssystems (100) bereitstellt und der Folgendes umfasst:

einen Empfänger (810), der konfiguriert ist zum Empfangen, von wenigstens einem zweiten Funknetzknoten (112), erster Statistikinformationen, die sich wenigstens auf einen oder mehrere erste Pfadverluste $PL_{1-2}$ von dem ersten Funknetzknoten (111) zu jeweils wenigstens einem zweiten Anwendergerät (122) in wenigstens einer zweiten Nachbarzelle (102), die durch den wenigstens einen zweiten Funknetzknoten (112) abgedeckt wird, beziehen;

eine Verarbeitungsschaltung (820), die zum Bestimmen eines ersten Sendeleistungspegels $P_1$, der für ein Abwärtsstreckensenden zu wenigstens einem ersten Anwendergerät (121) in der ersten Zelle (101) verwendet werden soll, basierend auf den ersten Statistikinformationen konfiguriert ist; und

einen Sender (830), der zum Senden zu dem wenigstens einen ersten Anwendergerät (121) unter Nutzung des ersten Sendeleistungspegels $P_1$ konfiguriert ist;

wobei das wenigstens eine zweite Anwendergerät (122) wenigstens ein zweites Zellenrandanwendergerät enthält, das sich in einer Nähe eines Rands der zweiten Zelle (102) befindet;

wobei der erste Funknetzknoten (111) mit dem wenigstens einen ersten Anwendergerät (121) unter Verwendung von zweiten Zellenrandsendebetriebsmitteln kommuniziert, die durch die zweite Zelle (102) für das wenigstens eine zweite Zellenrandanwendergerät (122) zugewiesen sind,

**dadurch gekennzeichnet, dass**

die ersten Statistikinformationen eine erste mittlere Pfadverlustschätzung $\mu_{PL1-2}$ und eine erste Schätzung einer Standardabweichung $\sigma_{PL1-2}$ für den einen oder die mehreren ersten Pfadverluste $PL_{1-2}$ enthalten, wobei die erste mittlere Pfadverlustschätzung $\mu_{PL1-2}$ und die erste Schätzung der Standardabweichung $\sigma_{PL1-2}$ basierend auf den ersten Pfadverlusten $PL_{1-2}$ berechnet werden.

9. Computerprogrammprodukt in einem ersten Funknetzknoten (111) nach Anspruch 8, das konfiguriert ist zum Ausführen des Verfahrens (400) nach einem der Ansprüche 1 bis 6 zur drahtlosen Kommunikation mit einem Anwendergerät (120) in einem drahtlosen Kommunikationssystem (100), wenn das Computerprogrammprodukt in eine Verarbeitungsschaltung (820) des ersten Funknetzknotens (111) geladen ist.

10. Zweiter Funknetzknoten (112), der Abdeckung für eine zweite Zelle (102) eines drahtlosen Kommunikationssystems (100) bereitstellt und der Folgendes umfasst:

eine Verarbeitungsschaltung (820), die konfiguriert ist zum Erhalten erster Messungen eines oder mehrerer erster Pfadverluste $PL_{1-2}$ von einem ersten Funknetzknoten (111) zu jeweils wenigstens einem zweiten Anwendergerät (122) in der zweiten Zelle (102), wobei der erste Funknetzknoten (111) eine erste Nachbarzelle (101) abdeckt; und konfiguriert ist zum Bestimmen erster Statistikinformationen, die sich wenigstens auf den einen oder die mehreren ersten Pfadverluste $PL_{1-2}$ von dem ersten Funknetzknoten (111) zu jeweils wenigstens einem zweiten Anwendergerät (122) beziehen, basierend auf den ersten Messungen; und

einen Sender (830), der konfiguriert ist zum Bereitstellen der ersten Statistikinformationen für den ersten Funknetzknoten (111);

wobei das wenigstens eine zweite Anwendergerät (122) wenigstens ein zweites Zellenrandanwendergerät enthält, das sich in einer Nähe eines Rands der zweiten Zelle (102) befindet;

wobei der erste Funknetzknoten (111) mit wenigstens einem ersten Anwendergerät (121) unter Verwendung von zweiten Zellenrandsendebetriebsmitteln kommuniziert, die durch die zweite Zelle (102) für das wenigstens eine zweite Zellenrandanwendergerät (122) zugewiesen sind,
**dadurch gekennzeichnet, dass**
die ersten Statistikinformationen eine erste mittlere Pfadverlustschätzung $\mu_{PL1-2}$ und eine erste Schätzung einer Standardabweichung $\sigma_{PL1-2}$ für den einen oder die mehreren ersten Pfadverluste $PL_{1-2}$ enthalten, wobei die erste mittlere Pfadverlustschätzung $\mu_{PL1-2}$ und die erste Schätzung der Standardabweichung $\sigma_{PL1-2}$ basierend auf den ersten Pfadverlusten $PL_{1-2}$ berechnet werden.

**11.** Computerprogrammprodukt in einem zweiten Funknetzknoten (112) nach Anspruch 10, das konfiguriert ist zum Ausführen des Verfahrens (400) nach Anspruch 7 zur drahtlosen Kommunikation mit einem Anwendergerät (120) in einem drahtlosen Kommunikationssystem (100), wenn das Computerprogrammprodukt in eine Verarbeitungsschaltung (820) des zweiten Funknetzknotens (112) geladen ist.

**12.** Drahtloses Kommunikationssystem (100), das Folgendes umfasst:

wenigstens einen ersten Funknetzknoten (111) nach Anspruch 8;
wenigstens ein erstes Anwendergerät (121), das zum Kommunizieren mit dem wenigstens einen ersten Funknetzknoten (111) konfiguriert ist;
wenigstens einen zweiten Funknetzknoten (112) nach Anspruch 10; und
wenigstens ein zweites Anwendergerät (122), das zum Kommunizieren mit dem wenigstens einen zweiten Funknetzknoten (112) konfiguriert ist.

**Revendications**

**1.** Procédé (400) dans un premier noeud de réseau radio (111) assurant la couverture pour une première cellule (101) d'un système de communication sans fil (100), le procédé comprenant les étapes suivantes :

- recevoir (401), à partir d'au moins un second noeud de réseau radio (112), des premières informations statistiques concernant au moins une ou plusieurs premières pertes de chemin $PL_{1-2}$ depuis ledit premier noeud de réseau radio (111) vers au moins un second équipement d'utilisateur (122), respectivement, dans au moins une seconde cellule voisine (102) couverte par ledit au moins un second noeud de réseau radio (112) ;
- déterminer (402) un premier niveau de puissance de transmission $P_1$ à utiliser pour une transmission en liaison descendante vers au moins un premier équipement d'utilisateur (121) dans ladite première cellule (101) sur la base desdites premières informations statistiques ; et
- transmettre (403) audit au moins un premier équipement d'utilisateur (121) via l'utilisation dudit premier niveau de puissance de transmission $P_1$ ;

où ledit au moins un second équipement d'utilisateur (122) comprend au moins un équipement d'utilisateur de bord de seconde cellule situé au voisinage d'un bord de ladite seconde cellule (102) ;
où lequel ledit premier noeud de réseau radio (111) communique avec ledit au moins un premier équipement d'utilisateur (121) en utilisant des ressources de transmission de bord de seconde cellule allouées par ladite seconde cellule (102) pour ledit au moins un second équipement d'utilisateur de bord de cellule (122),
**caractérisé en ce que**,
lesdites premières informations statistiques comprennent une première estimation de perte de chemin moyenne $\mu_{PL1-2}$ et une première estimation d'un écart type $\sigma_{PL1-2}$ pour lesdites une ou plusieurs premières pertes de chemin $PL_{1-2}$, où ladite première estimation de perte de chemin moyenne $\mu_{PL1-2}$ et ladite première estimation d'écart type $\sigma_{PL1-2}$ sont calculées sur la base desdites premières pertes de chemin $PL_{1-2}$.

**2.** Procédé selon la revendication 1, dans lequel ledit au moins un second équipement d'utilisateur de bord de cellule (122) reçoit une première puissance reçue de symbole de référence (RSRP) depuis ledit premier noeud de réseau radio (111) qui est au plus une valeur seuil de RSRP inférieure à une seconde RSRP dudit second noeud de réseau radio (112) au niveau dudit au moins un second équipement d'utilisateur de bord de seconde cellule (122).

**3.** Procédé selon la revendication 1 ou la revendication 2, dans lequel lesdites premières informations statistiques comprennent en outre des informations de charge U de ressources de transmission de bord de seconde cellule allouées par ladite seconde cellule (102) pour ledit au moins un second équipement d'utilisateur de bord de seconde cellule (122).

**4.** Procédé selon l'une quelconque des revendications 1 à 3, dans lequel ledit premier noeud de réseau radio (111) est agencé pour :

- obtenir (404) des secondes mesures d'une ou plusieurs secondes pertes de chemin $PL_{2-1}$ depuis ledit second noeud de réseau radio (112) vers au moins un premier équipement d'utilisateur (121), respectivement, dans ladite première cellule (101) ;
- déterminer (405) des secondes informations statistiques concernant au moins lesdites une ou plusieurs secondes pertes de chemin $PL_{2-1}$ sur la base desdites secondes mesures ; et
- fournir (406) lesdites secondes informations statistiques audit second noeud de réseau radio (112).

**5.** Procédé selon la revendication 4, dans lequel lesdites secondes informations statistiques sont fournies audit second noeud de réseau radio (112) via l'utilisation de n'importe quel dispositif contenu dans le groupe suivant :

- une interface radio entre lesdits premier (111) et second (112) noeuds de réseau radio ;
- un réseau central connectant lesdits premier (111) et second (112) noeuds de réseau radio ;
- une fibre optique connectant lesdits premier (111) et second (112) noeuds de réseau radio ;
- une interface filaire connectant lesdits premier (111) et second (112) noeuds de réseau radio ; et
- un troisième noeud de réseau connectant lesdits premier (111) et second (112) noeuds de réseau radio.

**6.** Procédé selon l'une quelconque des revendications 1 à 5, dans lequel ledit premier niveau de puissance de transmission $P_1$ est déterminé en calculant une suppression de puissance Z à utiliser pour ladite transmission en liaison descendante vers ledit au moins un premier équipement d'utilisateur (121), ledit calcul de ladite suppression de puissance Z étant basé sur lesdites premières informations statistiques.

**7.** Procédé (500) dans un second noeud de réseau radio (112) assurant la couverture pour une seconde cellule (102) d'un système de communication sans fil (100), comprenant les étapes suivantes :

- obtenir (501) des premières mesures d'une ou plusieurs premières pertes de chemin $PL_{1-2}$ depuis un premier noeud de réseau radio (111) vers au moins un second équipement d'utilisateur (122), respectivement, dans ladite seconde cellule (102), ledit premier noeud de réseau radio (111) couvrant une première cellule voisine (101) ;
- déterminer (502) des premières informations statistiques concernant au moins lesdites une ou plusieurs premières pertes de chemin $PL_{1-2}$ depuis ledit premier noeud de réseau radio (111) vers au moins un second équipement d'utilisateur (122), respectivement, sur la base desdites premières mesures ; et
- fournir (503) lesdites premières informations statistiques audit premier noeud de réseau radio (111) ;

où ledit au moins un second équipement d'utilisateur (122) comprend au moins un équipement d'utilisateur de bord de seconde cellule situé au voisinage d'un bord de ladite seconde cellule (102) ;
où ledit premier noeud de réseau radio (111) communique avec au moins un premier équipement d'utilisateur (121) via l'utilisation de ressources de transmission de bord de seconde cellule allouées par ladite seconde cellule (102) pour ledit au moins un second équipement d'utilisateur de bord de seconde cellule (122) ;
**caractérisé en ce que**,
lesdites premières informations statistiques comprennent une première estimation de perte de chemin moyenne $\mu_{PL1-2}$ et une première estimation d'un écart type $\sigma_{PL1-2}$ pour lesdites une ou plusieurs premières pertes de chemin $PL_{1-2}$, où ladite première estimation de perte de chemin moyenne $\mu_{PL1-2}$ et ladite première estimation d'écart type $\sigma_{PL1-2}$ sont calculées sur la base desdites premières pertes de chemin $PL_{1-2}$.

**8.** Premier noeud de réseau radio (111) assurant la couverture pour une première cellule (101) d'un système de communication sans fil (100), comprenant :

- un récepteur (810) configuré pour recevoir, depuis au moins un second noeud de réseau radio (112), des premières informations statistiques concernant au moins une ou plusieurs premières pertes de chemin $PL_{1-2}$ depuis ledit premier noeud de réseau radio (111) vers au moins un second équipement d'utilisateur (122), respectivement, dans au moins une seconde cellule voisine (102) couverte par ledit au moins un second noeud de réseau radio (112) ;
- un circuit de traitement (820) configuré pour déterminer un premier niveau de puissance de transmission $P_1$ à utiliser pour une transmission en liaison descendante vers au moins un premier équipement d'utilisateur (121) dans ladite première cellule (101) sur la base desdites premières informations statistiques ; et

- un émetteur (830) configuré pour transmettre audit au moins un premier équipement d'utilisateur (121) via l'utilisation dudit premier niveau de puissance de transmission $P_1$ ;

où ledit au moins un second équipement d'utilisateur (122) comprend au moins un équipement d'utilisateur de bord de second cellule situé au voisinage d'un bord de ladite seconde cellule (102) ;
où ledit premier noeud de réseau radio (111) communique avec ledit au moins un premier équipement d'utilisateur (121) via l'utilisation de ressources de transmission de bord de seconde cellule allouées par ladite seconde cellule (102) pour ledit au moins un second équipement d'utilisateur de bord de seconde cellule (122) ; **caractérisé en ce que**,

lesdites premières informations statistiques comprennent une première estimation de perte de chemin moyenne $\mu_{PL1\text{-}2}$ et une première estimation d'un écart type $\sigma_{PL1\text{-}2}$ pour lesdites une ou plusieurs premières pertes de chemin $PL_{1\text{-}2}$, où ladite première estimation de perte de chemin moyenne $\mu_{PL1\text{-}2}$ et ladite première estimation d'écart type $\sigma_{PL1\text{-}2}$ sont calculées sur la base desdites premières pertes de chemin $PL_{1\text{-}2}$.

9.  Produit programme informatique dans un premier noeud de réseau radio (111), selon la revendication 8, configuré pour exécuter le procédé (400) selon l'une quelconque des revendications 1 à 6, pour une communication sans fil avec un équipement d'utilisateur (120) dans un système de communication sans fil (100), lorsque le produit programme informatique est chargé dans un circuit de traitement (820) du premier noeud de réseau radio (111).

10. Second noeud de réseau radio (112) assurant la couverture pour une seconde cellule (102) d'un système de communication sans fil (100), comprenant :

    - un circuit de traitement (820) configuré pour obtenir des premières mesures d'une ou plusieurs premières pertes de chemin $PL_{1\text{-}2}$ depuis un premier noeud de réseau radio (111) vers au moins un second équipement d'utilisateur (122), respectivement, dans ladite seconde cellule (102), ledit premier noeud de réseau radio (111) couvrant une première cellule voisine (101) ; et configuré pour déterminer des premières informations statistiques concernant au moins lesdites une ou plusieurs premières pertes de chemin $PL_{1\text{-}2}$ depuis ledit premier noeud de réseau radio (111) vers au moins un second équipement d'utilisateur (122), respectivement, sur la base desdites premières mesures ; et
    - un émetteur (830) configuré pour fournir lesdites premières informations statistiques audit premier noeud de réseau radio (111) ;

où ledit au moins un second équipement d'utilisateur (122) comprend au moins un équipement d'utilisateur de bord de seconde cellule situé au voisinage d'un bord de ladite seconde cellule (102) ;
où ledit premier noeud de réseau radio (111) communique avec au moins un premier équipement d'utilisateur (121) via l'utilisation de ressources de transmission de bord de seconde cellule allouées par ladite seconde cellule (102) pour ledit au moins un second équipement d'utilisateur de bord de seconde cellule (122) ;
**caractérisé en ce que**,
lesdites premières informations statistiques comprennent une première estimation de perte de chemin moyenne $\mu_{PL1\text{-}2}$ et une première estimation d'un écart type $\sigma_{PL1\text{-}2}$ pour lesdites une ou plusieurs premières pertes de chemin $PL_{1\text{-}2}$, où ladite première estimation de perte de chemin moyenne $\mu_{PL1\text{-}2}$ et ladite première estimation d'écart type $\sigma_{PL1\text{-}2}$ sont calculées sur la base desdites premières pertes de chemin $PL_{1\text{-}2}$.

11. Produit programme informatique dans un second noeud de réseau radio (112), selon la revendication 10, configuré pour exécuter le procédé (400) selon la revendication 7, pour une communication sans fil avec un équipement d'utilisateur (120) dans un système de communication sans fil (100), lorsque le produit programme informatique est chargé dans un circuit de traitement (820) du second noeud de réseau radio (112).

12. Système de communication sans fil (100) comprenant :

    - au moins un premier noeud de réseau radio (111) selon la revendication 8 ;
    - au moins un premier équipement d'utilisateur (121) configuré pour communiquer avec ledit au moins un premier noeud de réseau radio (111) ;
    - au moins un second noeud de réseau radio (112) selon la revendication 10 ; et
    - au moins un second équipement d'utilisateur (122) configuré pour communiquer avec ledit au moins un second noeud de réseau radio (112).

Fig. 1

Fig. 2

Fig. 3

400

START

[401] Receive first statistical information

[402] Determine first transmission power level $P_1$

[403] Utilize first transmission power level $P_1$ for transmission to first UE

[404] Obtain second measurements of $PL_{2\text{-}1}$

[405] Determine second statistical information

[406] Provide the second statistical information to the second radio network node

END

Fig. 4

START

500

[501] Obtain first measurements of $PL_{2-1}$

[502] Determine first statistical information

[503] Provide the first statistical information to the first radio network node

END

Fig. 5

Common band

Remaining part of band

X    Y    Z

Fig. 6

Frequency

Case 1

111

112

101

121

102

122

CEU

Case 2

111

112

101

121

122

CEU

102

Case 3

111

112

101

121

102

122

CEU

Fig. 7

121/122 UE

840 Antennas

810
Rec.
unit

825
Memory

830
Transm.
unit

820
Processing circuit

111/112  Radio network node

Fig. 8

Fig. 9

Fig. 10

**EP 3 050 367 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20090069043 A